(19)

(11) **EP 3 748 556 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **20174595.7**

(22) Anmeldetag: **14.05.2020**

(51) Internationale Patentklassifikation (IPC):
***G06Q 10/04*** *(2023.01)*

(52) Gemeinsame Patentklassifikation (CPC):
**G06Q 10/04**

(54) **VERFAHREN UND VORRICHTUNG ZUM ERMITTELN EINER REGELUNGSSTRATEGIE FÜR EIN TECHNISCHES SYSTEM**

METHOD AND DEVICE FOR DETERMINING A CONTROL STRATEGY FOR A TECHNICAL SYSTEM

PROCEDE ET DISPOSITIF POUR DETERMINER UNE STRATEGIE DE CONTROLE D'UN SYSTEME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2019 DE 102019208264**

(43) Veröffentlichungstag der Anmeldung:
**09.12.2020 Patentblatt 2020/50**

(73) Patentinhaber: **Robert Bosch GmbH**
**70442 Stuttgart (DE)**

(72) Erfinder:
- **Klenske, Edgar**
**71272 Renningen (DE)**
- **Daniel, Christian**
**71229 Leonberg (DE)**
- **Froehlich, Lukas**
**70469 Stuttgart (DE)**

(56) Entgegenhaltungen:
**WO-A1-2018/219943 CN-A- 108 508 856**
**US-A1- 2013 158 678**

- **ERIC BROCHU ET AL: "A Tutorial on Bayesian Optimization of Expensive Cost Functions, with Application to Active User Modeling and Hierarchical Reinforcement Learning", ARXIV.ORG, CORNELL UNIVERSITY LIBRARY, 201 OLIN LIBRARY CORNELL UNIVERSITY ITHACA, NY 14853, 12 December 2010 (2010-12-12), XP080467931**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Technisches Gebiet

Die vorliegende Erfindung betrifft Verfahren zum Auffinden einer geeigneten Regelungsstrategie für ein technisches System, insbesondere unter Nutzung eines Bayes'schen Optimierungsverfahrens. Insbesondere betrifft die vorliegende Erfindung ein computerimplementiertes Verfahren zur effizienteren Optimierung von Modellparametern eines Regelungsmodells zur Implementierung einer Regelungsstrategie für ein technisches System.

Technischer Hintergrund

Beim sogenannten Reinforcement Learning interagiert ein Regelungssystem wiederholt mit der Umgebung und lernt aus dem Systemverhalten selbsttätig eine Handlungsstrategie. Der Lernvorgang erfolgt durch Minimierung eines durch eine Kostenfunktion bzw. Qualitätsfunktion angegebenen Kostenwerts, der eine Leistungsfähigkeit des Regelungssystems bewertet.

Insbesondere modellfreie Reinforcement Learning-Verfahren sind vorteilhaft, da keine Kenntnis über die Umgebung und das Zusammenwirken der Umgebung mit dem System erforderlich sind, jedoch ist die Interaktionszeit des Systems mit der Umgebung während des Lernprozesses sehr hoch. Dagegen wird bei herkömmlichen modellbasierten Verfahren initial eine Modellstruktur vorgegeben, die das Verhalten des Regelungssystems in der Umgebung grundsätzlich beschreibt. Dadurch können die Auswirkungen der Interaktion des Regelungssystems mit der Umgebung abgebildet werden. Die Anpassung der Modellstruktur durch eine Parameteranpassung ist einfach und effizient durchführbar. Jedoch hat das herkömmliche Verfahren Nachteile, da die gewählte Modellstruktur ungeeignet sein kann und dadurch die Parameteranpassung durch die Optimierung des Regelungsmodells nicht zu einem optimalen Ergebnis führt.

Die Erstellung und Optimierung eines Regelungsmodells in Verbindung mit Reinforcement Learning kann in Kombination mit einer Bayes'schen Optimierung durchgeführt werden, wobei die Kostenfunktion als Gaußprozessmodell modelliert wird. Dies ermöglicht die Erstellung eines effizienten Black-Box-Optimierers für Regelungsmodelle, die ansonsten aufwendig zu erstellen/parametrisieren wären. Jedoch ist aufgrund der hohen Anzahl von Modellparametern von derartigen Regelungsmodellen die Optimierung sehr aufwendig, so dass eine große Anzahl von Vermessungsvorgängen notwendig sind und durch die hohe Menge an Messdaten lange Trainingszeiten die Regel sind. US 2013/158678 A1 offenbart ein Verfahren zur Steuerung technischer Ausrüstung. XP080467931 beschreibt Bayes'sche Optimierungsverfahren. CN 108 508 856 A offenbart ein intelligentes Verfahren zur Steuerung einer Industrieanlage. WO 2018/219943 A1 offenbart ein Verfahren zur Steuerung eines Aktuators eines Roboters.

Offenbarung der Erfindung

Erfindungsgemäß sind ein Verfahren zum Erstellen einer Regelung für ein technisches System gemäß Anspruch 1 sowie die Vorrichtung und ein System gemäß den nebengeordneten Ansprüchen vorgesehen.

Weitere Ausgestaltungen sind in den abhängigen Ansprüchen angegeben.

Gemäß einem ersten Aspekt ist ein Verfahren zum Erstellen einer Regelung für ein technisches System mithilfe eines Bayes'schen Optimierungsverfahrens vorgesehen, wobei die Regelung basierend auf Modellparametern erstellt und ausführbar ist, wobei zur Optimierung der Regelung folgende Schritte ausgeführt werden:

- Bereitstellen einer Qualitätsfunktion, deren Form einer trainierbaren Regressionsfunktion entspricht und die eine Qualität einer Regelung des technischen Systems basierend auf Modellparametern bewertet;
- Durchführen eines Bayes'schen Optimierungsverfahrens basierend auf der Qualitätsfunktion, um iterativ einen Modellparametersatz mit Modellparametern zu optimieren;
- wobei vor dem Durchführen des Bayes'schen Optimierungsverfahrens initiale Regelungsmodelle auf Grundlage von mehreren dynamischen Systemmodellen erstellt werden und die Modellparameterdomäne, die die zulässigen Wertebereiche für die Modellparameter angibt, bestimmt wird, indem eine Verteilung der Modellparameter der initialen Regelungsmodelle bestimmt wird und abhängig von einem zugehörigen Maximum-a-Posteriori-Schätzwert und deren jeweiliger Standardabweichung der Verteilung der Modellparameter die Wertebereiche der Modellparameter initial definiert werden.

Zur Modellierung der Regelung eines Regelungssystems wird ein Regelungsmodell erstellt. Das Regelungsmodell definiert eine Regelungsstrategie und stellt eine funktionale Beziehung dar, mit der eine Stellgröße basierend auf einer oder mehrerer Eingangsgrößen der Regelung berechnet werden. Mindestens eine der Eingangsgrößen entspricht dabei einer Zustandsgröße des zu regelnden technischen Systems.

Die Form des Regelungsmodells kann in vielfältiger Weise vorgegeben werden. So kann das Regelungsmodell eine Formelbeziehung beinhalten oder darauf basieren, die auf physikalischen Gesetzmäßigkeiten basiert, wie z.B. Bewegungsgleichungen, Schwingungsgleichungen, Dämpfungsverhalten usw.. Auch kann das Regelungsmodell auf einer frei gewählten oder in sonstiger Weise bestimmten Formelbeziehung beruhen. Häufig muss die Formelbeziehung ein nichtlineares Verhalten des technischen Systems berücksichtigen.

Bayes'sche Optimierungsverfahren für die Ermittlung eines Regelungsmodells wenden verschiedene Regelungsstrategien iterativ mit einem technischen System an und optimieren die Regelung auf effiziente Weise. Dabei kann die Qualitätsfunktion mithilfe einer trainierbaren Regressionsfunktion, insbesondere mithilfe einer Gauß-Prozess-Regression modelliert werden, um die Leistungsfähigkeit des Systemmodells als Funktion der Modellparameter des Regelungsmodells zu modellieren, wobei die Gauß-Prozess-Regression basierend auf rauschbehafteten (da gemessenen) Zustandsgrößen erstellt wird.

Grundsätzlich betrifft das Problem, eine Regelungsstrategie aufzufinden, die einen Systemzustand auf einen Eingangsgrößenvektor abbildet. Dazu wird ein von den Modellparametern der Regelungsstrategie abhängiges Verhalten der Regelung des technischen Systems über einen vorbestimmten Zeithorizont basierend auf den Zustandsgrößenvektoren (aus mehreren Zustandsgrößen) und Eingangsgrößenvektoren (aus mehreren Eingangsgrößen) ausgewertet, um eine Güte des Verhaltens des technischen Systems zu bestimmen. Die Güte des Verhaltens des technischen Systems kann durch eine Bewertung bezüglich eines gewünschten Verhaltens bestimmt werden. Beispielsweise können Kriterien wie Schwingungsneigung, Einschwingdauer, Störempfindlichkeit, Robustheit und/oder dergleichen bewertet werden. Das Verhalten der Regelung des technischen Systems wird auch als unbekannte Funktion bezeichnet. Die Qualitätsfunktion (Kostenfunktion) entspricht einem mathematischen Modell, das die Güte des Verhaltens der Regelung des technischen Systems abhängig von den Modellparametern der zugrundeliegenden Regelungsstrategie bewertet.

Im Allgemeinen wird die Bayes'sche Optimierung angewendet, wenn eine unbekannte Funktion f, eine sogenannte "Black-Box"-Funktion, die einem Verhalten des technischen Systems entspricht, minimiert werden soll. Diese unbekannte Funktion $f$ kann lediglich für einen Wert x ausgewertet bzw. vermessen und (möglicherweise durch Rauschen behaftet) beobachtet werden. Der beobachtete Wert y ergibt sich als $y = f(x) + e$, wobei e den Rauschanteil bezeichnet. Zudem wird angenommen, dass jede Auswertung / jedes Vermessen der unbekannten Funktion f teuer ist, d.h. Kosten verursacht, in dem Sinne, dass die Auswertung der unbekannten Funktion einen hohen Aufwand verursacht/, wie es z.B. bei einer Ausführung eines Experiments auf einem Prüfstand der Fall ist. Aufgrund der teuren Auswertung der unbekannten Funktion, ist es erstrebenswert, dass während der Optimierung lediglich wenige Auswertungen vorgenommen werden müssen.

Unter gewissen Vorannahmen, wie z.B. der Stetigkeit des Systemverhaltens bzw. der unbekannten Funktion, kann die unbekannte Funktion mit einer Gauss-Prozess-Regression durch die Qualitätsfunktion approximiert werden. Dazu kann nach einer Auswertung der unbekannten Funktion an mehreren Auswertungspunkten ($x_1, ..., x_n$) und Beobachtung der entsprechenden Funktionswerte ($y_1, ... y_n$) mithilfe des Gauss-Prozesses die Qualitätsfunktion trainiert werden. Eine Eigenschaft des Gauss-Prozesses ist, dass in Bereichen um die Auswertungspunkte die Modellvorhersage sehr gut ist und die unbekannte Funktion, d.h. das Systemverhalten, gut approximiert wird. Dies spiegelt sich in einer geringen Unsicherheit der Qualitätsfunktion wieder. Fernab von Auswertungspunkten werden die Modellvorhersagen der Qualitätsfunktion über die unbekannte Funktion schlecht und die Unsicherheit nimmt mit zunehmenden Abstand zu den Auswertungspunkten zu.

Eine mögliche Strategie, um die Modellparameter der Regelungsstrategie und damit das Systemverhalten zu optimieren, ist, die unbekannte Funktion an vielen verschiedenen Stellen (z.B. auf einem regelmäßigen Gitter) auszuwerten und den niedrigsten beobachteten Funktionswert als das Ergebnis der Optimierung anzunehmen. Dieses Vorgehen ist ineffizient und es sind viele Auswertungen mit entsprechend hohem Aufwand notwendig, das Optimum aufzufinden.

Anstelle dieses Ansatzes wird die Qualitätsfunktion verwendet, um neue Auswertungspunkte auszuwählen. Dazu wird ein neuer Auswertungspunkt für das Auswerten/Vermessen des Systemverhaltens so ausgewählt, dass dadurch zum einen die Aussagekraft der Qualitätsfunktion verbessert wird, so dass die Unsicherheit des geschätzten Erwartungswerts der Qualitätsfunktion reduziert wird. Dazu werden in der Regel die Auswertungspunkte in Bereichen gewählt, in denen die unbekannte Funktion noch nicht ausgewertet wurde bzw. das technische System noch nicht vermessen wurde (Exploration). Zum anderen wird ein neuer Auswertungspunkt für das Auswerten der unbekannten Funktion bzw. zum Vermessen des technischen Systems so ausgewählt, dass das Ziel, ein Optimum zu finden , schnellstmöglich bzw. mit einer geringen Zahl von Vermessungen an den Auswertungspunkten erreicht wird. Dafür werden basierend auf dem Gauss-Prozess Auswertungspunkte zur Auswahl bevorzugt, die niedrige Funktionswerte versprechen (Exploitation). Diese zwei gegensätzlichen Kriterien werden dadurch abgewägt, dass der Auswertungspunkt mithilfe einer vorgegebenen Aquisitionsfunktion ausgewählt wird.

Die Aquisitionsfunktion nutzt Parameter der Qualitätsfunktion, die durch ein Gauß-Prozess-Modell beschrieben wird, wie z.B. den Erwartungswert $\mu(x)$ und die diesem Erwartungswert zugeordnete Standardabweichung $\sigma(x)$. Ein Beispiel ist die sogenannte Lower-Confidence-Bound (LCB) Aquisitionsfunktion, die wie folgt beschrieben wird: $LCB(x) = \mu(x) - k\sigma(x)$. Der Faktor k wird in der Praxis oft konstant z.B. auf einen bestimmten Wert festgelegt, wie z.B. k = 2. Dieses neue Kriterium kann effizient mit gängigen gradienten-basierten Methoden minimiert werden und das Minimum von LCB(x) bildet dann den neuen Auswertungspunkt für die unbekannte Funktion f bzw. das Vermessen des technischen Systems. Hierbei ist zu beachten, dass für die Optimierung der Qualitätsfunktion vorab eine Modelparameterdomäne definiert werden muss, die Wertebereiche für die jeweiligen Modellparameter angeben, innerhalb denen nach dem nächsten Auswertungspunkt gesucht wird. Diese Modelparameterdomäne wird bisher typischerweise aufgrund von Erfahrungs- und/oder Expertenwissen gewählt.

Nach der Auswertung des Verhaltens des technischen Systems (z.B. durch Vermessen an dem Auswertungspunkt) wird die trainierbare Regressionsfunktion mit den neuen Daten aktualisiert bzw. neu trainiert und ein nächster Auswertungspunkt wird nach dem oben beschrieben Verfahren ausgewählt. Typischerweise wird dieses Verfahren solange wiederholt, bis ein Abbruchkriterium erfüllt ist, also z.B. die Zeitdauer, die für die Optimierung der unbekannten Funktion f (d.h. des Verhaltens des technischen Systems) aufgewendet werden soll.

Nachdem das Optimierungsverfahren abgeschlossen ist, wird der Funktionswert x als Ort des Minimums der Qualitätsfunktion empfohlen, d.h. den Wert, der den Erwartungswert des Gauss-Prozesses minimiert.

Das LCB-Kriterium ist nicht die einzige Akquisition-Funktion, die in der Literatur vorgeschlagen wurden. Andere Kriterien sind z.B. Expected Improvement (EI), Upper Confidence Bound (UCB), Probability of Improvement (PI) oder sogenannte Entropy Search Methoden, die auf informations-theoretischen Überlegungen basieren.

Gemäß dem obigen Verfahren wird das Bayes'sche Optimierungsverfahren dazu verwendet, die Modellparameter der Regelungsstrategie durch eine Minimierung der zunächst unbekannten Qualitätsfunktion aufzufinden. Ziel ist es, das Regelungsmodell so zu erstellen, dass das Verhalten des technischen Systems möglichst genau den gewünschten Spezifikationen entspricht. Die Qualitätsfunktion kann ggfs. entsprechend der Leistungsfähigkeit des Regelungssystems abhängig von den jeweiligen Modellparametern stets aktualisiert werden. Für die Aktualisierung der Qualitätsfunktion ist eine Bewertung der jeweiligen Modellparameter erforderlich, was ein Betreiben des Regelungssystems mit den jeweiligen Modellparametern in der realen Umgebung notwendig macht. Während des Betriebs des Regelungssystems wird ein Qualitätsmaß, das die Güte des Verhaltens des so geregelten technischen Systems wiederspiegelt, erfasst, und den aktuellen Modellparametern zugeordnet. Durch die Notwendigkeit, dass Regelungssystem für den Vermessungsvorgang real zu betreiben, wird die Verbesserung der Bewertung der Kosten durch die kontinuierlich zu aktualisierende Qualitätsfunktion sehr aufwendig. Daher ist es wünschenswert, die Anzahl der Vermessungsvorgänge am realen technischen System möglichst zu minimieren.

Jeweils nach einem oder mehreren Vermessungsvorgängen kann die Qualitätsfunktion mit den zuletzt vermessenen Modellparametern und die resultierenden Qualitätsmaße aktualisiert und ein neuer Satz von Testmodellparameter ausgewählt werden, indem eine vorgegebene Aquisitionsfunktion, die den Verlauf oder Parameter der Qualitätsfunktion bewertet, minimiert oder maximiert wird. Die Aquisitionsfunktion ist so vorgegeben, dass sie einen Kompromiss zwischen Exploration und Exploitation gewährleistet. Exploration bedeutet im Kontext des erfindungsgemäßen Verfahren, dass Bereiche des möglichen Modellparameterraums für die Auswahl eines neuen Testmodellparameters bevorzugt werden, in denen noch nicht durch einen vorangehenden Vermessungsvorgang ein Qualitätsmaß ermittelt bzw. das Systemverhalten bewertet worden sind. Exploitation im Kontext des erfindungsgemäßen Verfahren bedeutet, dass ein Test-Modellparameter für die nächste Bewertung durch einen Vermessungsvorgang ausgewählt wird, der als ein Satz optimaler Modellparameter eingeschätzt wird.

Es wird im folgenden beispielhaft angenommen, dass die Regelungsstrategie einer Linearzustandsregelungsstrategie von $\pi_\theta(\boldsymbol{x}) = -K(\theta)\boldsymbol{x}$ entspricht, wobei K eine die Regelung charakterisierende Regelungsmatrix ist. Lineare Regelungsstrategien haben den Vorteil, dass sie eine geringe Dimensionalität im Vergleich zu anderen Regelungsmodellen aufweisen. Weiterhin ermöglicht die lineare Regelungsstrategie, dass diese in einfacher Weise in Reglern umgesetzt werden kann und so die Effizienz der Bayes'schen Optimierung erhöht wird.

Die Regelungsstrategie-Optimierung wird durchgeführt, indem die Elemente der Regelungsmatrix angepasst werden. Die Elemente der Regelungsmatrix können direkt als Modellparameter angenommen werden oder als von Modellparametern abhängig angenommen werden.

Eine Idee des obigen Verfahrens besteht darin, ein Regelungsmodell mithilfe eines Bayes'schen Optimierungsverfahrens in einer eingeschränkten Modelparameterdomäne zu ermitteln. Während es bei einem herkömmlichen Bayes'schen Optimierungsverfahren nicht ohne weiteres möglich ist, die Wertebereiche für einzelne Modellparameter, in denen die Suche nach einer Regelungsstrategie durchgeführt werden soll, so zu bestimmen, dass die Suche effizienter, d.h. mit einer geringeren Anzahl von Messvorgängen, ausgeführt wird, können gemäß dem vorliegenden Verfahren durch initiale Vorgabe von dynamischen Systemmodellen und deren Umwandlung in initiale Regelungsmodelle sinnvolle Wertebereiche der Modellparameter des Regelungsmodells bestimmt werden.

Auf diese Weise kann die Modellparameterdomäne für die Bayes'sche Optimierung automatisch, d.h. ohne manuelle Vorgabe von Wertebereichen für die Modellparameter, vor dem Optimierungsverfahren automatisch festgelegt werden, so dass die Anzahl der Messvorgänge für die Optimierung erheblich reduziert werden kann.

Insbesondere können die Regelungsmodelle durch eine Regelungsmatrix K=dlqr(A,B,Q,R) vorgegeben werden. Dabei können die Wertebereiche für die Modellparameter abhängig von einem Maximum-Posterior-Schätzwert (MAP-Schätzwert) der Elemente der Regelungsmatrix K ermittelt werden. Weiterhin können die Wertebereiche abhängig von einem Toleranzbereich vorgegeben werden.

Weiterhin können die Modellparameter des Regelungsmodells während des Regeln des technischen Systems basierend auf dem obigen Verfahren kontinuierlich oder zu regelmäßigen oder vorbestimmten Zeitpunkten angepasst werden.

Gemäß einem weiteren Aspekt ist eine Vorrichtung zum Erstellen einer Regelung für ein technisches System mithilfe eines Bayes'schen Optimierungsverfahrens vorgesehen, wobei die Regelung basierend auf Modellparametern eines Regelungsmodells erstellt und ausführbar ist, wobei die Vorrichtung ausgebildet ist, um zur Optimierung der Regelung folgende Schritte auszuführen:

- Bereitstellen einer Qualitätsfunktion, die einer trainierbaren Regressionsfunktion entspricht und die eine Qualität einer Regelung des technischen Systems basierend auf Modellparametern bewertet;
- Durchführen eines Bayes'schen Optimierungsverfahrens basierend auf der Qualitätsfunktion, um iterativ einen Modellparametersatz mit Modellparametern innerhalb einer initial vorgegebenen Modellparameterdomäne zu optimieren;

wobei vor dem Durchführen des Bayes'schen Optimierungsverfahrens initiale Regelungsmodelle auf Grundlage von mehreren dynamischen Systemmodellen erstellt werden und die Modellparameterdomäne, die die zulässigen Wertebereiche für die Modellparameter angibt, bestimmt wird, indem eine Verteilung der Modellparameter der initialen Regelungsmodelle bestimmt wird und abhängig von einem zugehörigen Maximum-a-Posteriori-Schätzwert und deren jeweiliger Standardabweichung der Verteilung der Modellparameter die Wertebereiche der Modellparameter initial definiert werden.

Gemäß einem weiteren Aspekt ist ein Regelungssystem mit einem technischen System und einer Regelungseinheit zum Regeln des technischen Systems, wobei in der Regelungseinheit ein Regelungsmodell zum Bereitstellen eines Eingangsgrößenvektors abhängig von Zustandsgrößen des technischen Systems implementiert ist, wobei ein Modellerstellungsblock vorgesehen ist, um iterativ einen Modellparametersatz mit Modellparametern für das Regelungsmodell auf Grundlage eines in einem Optimierungsblock ausgeführten Bayes'schen Optimierungsverfahrens innerhalb einer initial vorgegebenen Modellparameterdomäne zu optimieren, wobei das Bayes'schen Optimierungsverfahren basierend auf einer vorgegebenen Qualitätsfunktion, die in einem Qualitätsfunktionsblock bestimmt bzw. vorgegeben wird, durchgeführt wird, wobei vor dem Durchführen des Bayes'schen Optimierungsverfahrens initiale Regelungsmodelle auf Grundlage von mehreren dynamischen Systemmodellen erstellt werden und die Modellparameterdomäne, die die zulässigen Wertebereiche für die Modellparameter angibt, bestimmt wird, indem eine Verteilung der Modellparameter der initialen Regelungsmodelle bestimmt wird und abhängig von einem zugehörigen Maximum-a-Posteriori-Schätzwert und deren jeweiliger Standardabweichung der Verteilung der Modellparameter die Wertebereiche der Modellparameter initial definiert werden.

Kurzbeschreibung der Zeichnungen

Ausführungsformen werden nachfolgend anhand der beigefügten Zeichnungen näher erläutert. Es zeigen:

Figur 1 eine schematische Darstellung eines Regelungssystems mit einer Regelungseinheit und einem zu regelndem technischen System;

Figur 2 ein Flussdiagramm zur Veranschaulichung des Verfahrens zum Durchführen einer Optimierung einer Regelungsstrategie mithilfe eines Bayes'schen Optimierungsverfahrens;

Figur 3 ein Diagramm mit einer schematischen Darstellung der Funktionsweise der dynamischen Anpassung der Modellparameterdomäne.

Beschreibung von Ausführungsformen

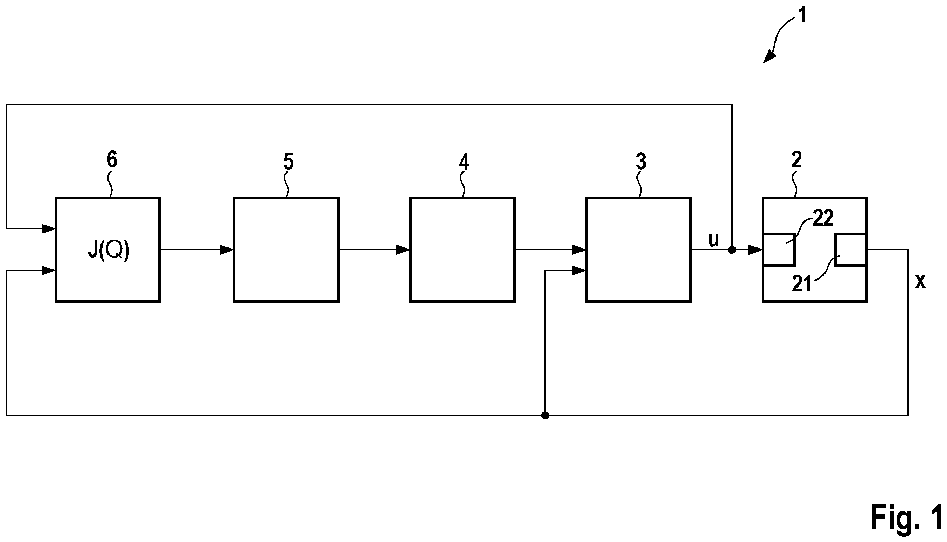

Figur 1 zeigt eine schematische Darstellung eines sich selbst anpassenden Regelungssystems 1, das zur Regelung eines technischen Systems 2 ausgebildet ist. Ein technisches System 2 kann beispielsweise ein Verbrennungsmotor eines Kraftfahrzeugs oder ein Teilsystem davon sein. Eine Regelungseinheit 3 regelt das technische System 2 mit einer Abfolge von Eingangsgrößen u als Stellgrößen an, die zu bestimmten Betriebspunkten (Systemzuständen) des technischen Systems 2 führen. Die Eingangsgrößen u umfassen in der Regel eine Anzahl von mehreren Eingangsgrößen, die in einem Eingangsgrößenvektor $\boldsymbol{u} \in \mathbb{R}^d$ zusammengefasst sind. Zudem gilt für jede der Eingangsgrößen (Elemente des Eingangsgrößenvektors ***u***) ein zulässiger Wertebereich. Weiterhin resultiert die Ansteuerung des technischen Systems 2 in einer oder mehreren Zustandsgrößen, die an einem zu vermessenden Eingangsgrößenvektor **u** gemessen werden und die in Form eines Zustandsgrößenvektors **x** dargestellt sind.

Mithilfe eines oder mehrerer Sensoren 21, die Teil des technischen Systems 2 sind, können Verläufe einer oder mehrerer Messgrößen $x_1 ... x_D$ erfasst werden, die jeweils entsprechende Zustandsgrößen $x_1$ (t)...$x_D$ (t), die jeweils die Systemzustände x des technischen Systems 2 angeben, repräsentieren. D entspricht dabei der Anzahl von Zustandsgrößen. Somit wird der Systemzustand des technischen Systems 2 mithilfe des einen oder der mehreren Sensoren 21 erfasst und als Zustandsgrößen eines Zustandsgrößenvektors x an die Regelungseinheit 3 übermittelt.

Eingangsgrößen u entsprechen Stellgrößen der Regelungseinheit 3, die basierend auf den Zustandsgrößen x und der Regelungsstrategie $\pi_\theta$ (***x***) ermittelt werden. Der Betrieb des technischen Systems 2 erfolgt abhängig von den Eingangsgrößen u(t) mithilfe eines oder mehrerer Aktoren 22 des technischen Systems 2. Beispielsweise so kann eine Bewegung eines Roboters oder Fahrzeugs gesteuert werden oder eine Steuerung einer Antriebseinheit oder eines Fahrerassistenzsystems eines Fahrzeugs erfolgen. Eine Eingangsgröße u kann beispielsweise einer elektrischen Spannung entsprechen, die an einen elektromechanischen Stellgeber als Aktor 22 angelegt wird. Der Aktor 22 wird entsprechend der einen oder der mehreren Eingangsgrößen u angesteuert und führt eine entsprechende Aktion aus. Der Aktor 22 kann hierbei eine (nicht notwendigerweise baulich integrierte) Ansteuerlogik umfassen, welches aus der Eingangsgrößen ***u*** eine Ansteuergröße ermittelt, mit der der betreffende Aktor 22 angesteuert wird.

In einem Ausführungsbeispiel wird die Regelungseinheit 3 zur Regelung eines Verbrennungsmotors als technisches System eingesetzt. Dazu können eine Drosselklappenstellung, eine Kraftstoffzufuhr, und/oder der gleichen als Eingangsgrößen dem Drosselklappensteller bzw. der Ansteuerung für Einspritzventile vorgeben werden und entsprechende Zustandsgrößen, wie beispielsweise eine Drehzahl, eine Last, eine Motortemperatur empfangen werden.

In einem Ausführungsbeispiel wird die Regelungseinheit 3 zur Regelung eines wenigstens teilautonomen Roboters, insbesondere eines wenigstens teilautonomen Kraftfahrzeugs, als technisches System 2 eingesetzt. Bei dem Sensor 21 kann es sich beispielsweise um einen oder mehrere vorzugsweise im Kraftfahrzeug angeordnete Videosensoren und/oder einen oder mehrere Radarsensoren und/oder einen oder mehrere Ultraschallsensoren und/oder einen oder mehrere LiDAR-Sensoren und/oder einen oder mehrere Positionssensoren (beispielsweise GPS) handeln. Alternativ oder zusätzlich kann der Sensor 21 auch ein Informationssystem umfassen, das eine Information über einen Zustand des technischen Systems (Kraftfahrzeug) ermittelt, wie beispielsweise ein Wetterinformationssystem, das einen aktuellen oder zukünftigen Zustand des Wetters in einer Umgebung des Kraftfahrzeugs ermittelt.

In einem weiteren Ausführungsbeispiel wird die Regelungseinheit 3zur Regelung einer Funktion in einem Kraftfahrzeug als technisches System eingesetzt. Dazu können eine Fahrpedalstellung, ein Lenkeingriff in Form eines Handgelenkmoments oder einer Lenkstellung, Umgebungsinformationen, wie zum Beispiel Position von Umgebungsobjekten, ein Bremseingriff und/oder dergleichen als Eingangsgrößen vorgegeben werden und entsprechende Zustandsgrößen, die das Fahrverhalten des Kraftfahrzeugs angeben, wie beispielsweise Fahrzeuggeschwindigkeit, Kurvenlage, Abstand zu Umgebungsobjekten und dergleichen empfangen werden.

Die Regelungseinheit 3 kann mit den mehreren Messgrößen $x_1 ... x_D$ beispielsweise Zustände bzw. Zustandsverläufe des wenigstens teilautonomen Roboters detektieren, wie beispielsweise eine Motordrehzahl, eine Fahrzeuggeschwindigkeit, einen Kraftstoffverbrauch, eine Motortemperatur, eine Längsgeschwindigkeit und/oder eine Quergeschwindigkeit, einen Lenkwinkel, eine Gierrate, und dergleichen. Bei dem vorzugsweise im Kraftfahrzeug angeordneten Aktor 32 kann es sich beispielsweise um eine Bremse, einen Antrieb oder eine Lenkung des Kraftfahrzeugs handeln.

Alternativ kann es sich bei dem wenigstens teilautonomen Roboter auch um einen anderen mobilen Roboter (nicht abgebildet) handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter handeln.

In noch weiteren Alternativen kann es sich bei dem wenigstens teilautonomen Roboter auch um ein Haushaltsgerät (nicht abgebildet), insbesondere eine Waschmaschine, einen Herd, einen Backofen, eine Mikrowelle oder eine Spülmaschine handeln. Mit dem Sensor 21, beispielsweise einem optischen Sensor, kann ein Zustand eines mit dem Haushaltsgerät behandelten Objekts erfasst werden, beispielsweise im Falle der Waschmaschine ein Zustand von Wäsche, die in der Waschmaschine befindlich ist. Mit der Regelungseinheit 3 kann dann eine Art oder ein Zustand dieses Objekts ermittelt und durch die Messgrößen $x_1 ... x_D$ charakterisiert werden. Die Eingangsgrößen können dann derart ermittelt werden, dass das Haushaltsgerät abhängig von der ermittelten Art oder dem ermittelten Zustand des Objekts angesteuert wird. Beispielsweise kann im Falle der Waschmaschine diese abhängig davon angesteuert werden, aus welchem Material die darin befindliche Wäsche ist. Die Eingangsgrößen u(t) können dann abhängig davon gewählt werden, welches Material der Wäsche ermittelt wurde.

In einer weiteren Ausführungsform kann die Regelungseinheit 3 zur Ansteuerung einer Fertigungsmaschine (technisches System 3) eines Fertigungssystems verwendet werden, indem ein diese Fertigungsmaschine steuernder Aktor 22 durch Eingangsgrößen angesteuert wird. Bei der Fertigungsmaschine 11 kann es sich beispielsweise um eine Maschine zum Stanzen, Sägen, Bohren, Fräsen, Drehen und/oder Schneiden handeln.

Bei dem Sensor 21 dann beispielsweise um einen optischen Sensor handeln, der z.B. Eigenschaften von Fertigungserzeugnissen erfasst. Es ist möglich, dass der die Fertigungsmaschine steuernde Aktor 22 abhängig von den ermittelten Eigenschaften des Fertigungserzeugnisses angesteuert wird, damit die Fertigungsmaschine entsprechend einen nachfolgenden Bearbeitungsschritt dieses Fertigungserzeugnisses ausführt. Es ist auch möglich, dass der Sensor 21 die Eigenschaften des von der Fertigungsmaschine bearbeiteten Fertigungserzeugnisses ermittelt, und abhängig davon eine Ansteuerung der Fertigungsmaschine für ein nachfolgendes Fertigungserzeugnis anpasst.

Die Regelung der Regelungseinheit 3 folgt einer Regelungsstrategie. Durch einen dynamischen Prozess soll die Regelungsstrategie angepasst werden, sodass das Systemverhalten bezüglich einer Qualitätsfunktion optimal wird. Dazu wird ein Optimierungsverfahren ausgeführt, dass Modellparameter des der Regelungsstrategie zugrundeliegenden Regelungsmodell so optimiert, dass die Leistungsfähigkeit des geregelten technischen Systems 2 optimiert wird. Dazu wird ein Regelungsmodell (Dynamikmodell) in einem Modellerstellungsblock 4 erstellt, das Grundlage für die Regelungsstrategie der Regelungseinheit 3 ist. Der Modellerstellungsblock 4 ermittelt die Modellparameter für das Regelungsmodell auf Grundlage eines in einem Optimierungsblock 5 ausgeführten Bayes'schen Optimierungsverfahrens. Dies erfolgt basierend auf einer vorgegebenen Qualitätsfunktion, die in einem Qualitätsfunktionsblock 6 bestimmt bzw. vorgegeben wird.

In weiteren bevorzugten Ausführungsformen sind die Regelungseinheit 3, der Modellerstellungsblock 4, der Optimierungsblock 5 und der Qualitätsfunktionsblock 6 in einer Recheneinheit implementiert. Die Recheneinheit umfasst das Steuergerät 2 eine Ein- oder Mehrzahl von Prozessoren und wenigstens ein maschinenlesbares Speichermedium, auf dem Anweisungen gespeichert sind, die dann, wenn sie auf den Prozessoren ausgeführt werden, die Recheneinheit veranlassen, das erfindungsgemäße Verfahren auszuführen.

Das technische System 2 entspricht einem dynamischen System, das mithilfe einer Regelungseinheit 3 mit einer geeigneten Regelungsstrategie, die entsprechend mithilfe eines Bayes'schen Optimierungsverfahrens erstellt werden soll, in optimierter Weise geregelt wird. Das Bayes'sche Optimierungsverfahren wird verwendet, um das Regelungsmodell zu ermitteln, indem während des Optimierungsverfahrens verschiedene Test-Modellparametersätze iterativ zur Regelung des technischen Systems 2 angewendet und die Modellparameter basierend auf den resultierenden Zustandsgrößen angepasst werden. Dabei wird eine Qualitätsfunktion mithilfe einer Gauß-Prozess-Regression bzw. mit einem sonstigen trainierbaren Regressionsverfahren modelliert, durch die die Leistungsfähigkeit der Regelung des technischen Systems 2 als Funktion der Modellparameter definiert wird.

Die Leistungsfähigkeit der Regelung ergibt sich aus einem vorgegebenen Qualitätskriterium (Qualitätsmaß), das den resultierenden Zustandsgrößen (insbesondere deren Verläufen) des technischen Systems 2 eine Güte der Regelung basierend auf einem Vergleich mit einem gewünschten Verhalten des durch das auf den Modellparametern basierenden Regelungsmodell geregelten technischen Systems 2 zuweist. Die Zustandsgrößen sind toleranzbehaftet, so dass die Qualitätsfunktion vorzugsweise durch eine Gauß-Prozess-Regression abgebildet wird.

Grundsätzlich betrifft das Problem, eine Regelungsstrategie aufzufinden, das einen Systemzustand $\boldsymbol{x}$ auf einen Eingangsgrößenvektor $\boldsymbol{u} = \pi_\theta(x)$ mit $\pi_\theta: \mathbb{R}^{n_x} \rightarrow \mathbb{R}^{n_u}$ abbildet, wobei Modellparameter der Regelungsstrategie in der Modellparameterdomäne $\Theta$ darstellen. Eine von den Modellparametern $\theta$ abhängige Qualitätsfunktion J wird über einen vorbestimmten Zeithorizont t=0... T basierend auf den Zustandsvektoren $\boldsymbol{x}$ und Eingangsgrößenvektoren $\boldsymbol{u}$ vorgegeben, wobei die Modellparameter $\theta$ durch das Optimierungsverfahren optimiert werden sollen:

$$\min_{\boldsymbol{\theta}} J(\boldsymbol{\theta}) = \min_{\boldsymbol{\theta}} \sum_{t=0}^{T} \mathbb{E}\left[c\left(\boldsymbol{x}_t, \pi_\theta(\boldsymbol{x}_t)\right)\right]$$

$$s.t.\, \boldsymbol{x}_{t+1} = f\left(\boldsymbol{x}_t, \pi_\theta(\boldsymbol{x}_t)\right) + v$$

wobei $\mathbb{E}$ einem Erwartungswert entspricht, $c(\boldsymbol{x}_t, \boldsymbol{u}_t)$ das Qualitätsmaß des durch den Zustandsvektor $\boldsymbol{x}_t$ gegebenen Zustands bei anliegendem Eingangsgrößenvektor $\boldsymbol{u}_t$ und $f: \mathbb{R}^{n_x} \times \mathbb{R}^{n_u} \rightarrow \mathbb{R}^{n_x}$ das Zustandsübergangsmodell darstellen, das die Dynamiken des technischen Systems 2 beschreibt und das weiterhin durch die Rauschgröße $v \sim N(0, \Sigma_v)$ beaufschlagt ist. Das Qualitätsmaß kann durch einen Vergleich des Systemverhaltens mit einem gewünschten Systemverhalten ermittelt werden, wobei das Qualitätskriterium eine Robustheit, eine Schwingungsneigung, eine Einschwingzeit und eine Güte der Regelung angeben kann.

Das Bayes'sche Optimierungsverfahren dient dazu, die optimierten Modellparameter $\theta^*$ einer Regelungsstrategie durch eine Minimierung der Qualitätsfunktion (die z.B. die Kosten darstellt) aufzufinden. Alternativ können die optimierten Modellparameter $\theta^*$ der Regelungsstrategie je nach Aussagegehalt der Qualitätsmaße auch durch eine Maximierung der Qualitätsfunktion ermittelt werden. Ziel ist es, dass die Regelungsstrategie eine möglichst optimale Regelung des technischen Systems 2 mit der Regelungseinheit 3 ermöglicht, wobei "optimal" eine Minimierung/Maximierung (Optimierung) eines Qualitätsmaßes, das durch die Qualitätsfunktion abhängig von den Modellparametern bestimmt ist und eine vorgegebene Leistungsfähigkeit des Gesamtsystems aus Regelungseinheit 3 und technisches System 2 angibt.

Die Qualitätsfunktion kann also ein Qualitätsmaß angeben, das die Abweichung des Verhaltens des realen technischen System 2 während des Zeitfensters t=0..T bezogen auf eine vorgegebene gewünschte Leistungsfähigkeit (ideales Systemverhalten) bewertet. Das Auswerten der Qualitätsfunktion erfordert also das Betreiben des technischen Systems 2 in der realen Umgebung in einem Vermessungsvorgang. Durch die Notwendigkeit, das Regelungssystem, das das technische System 2 und die Regelungseinheit 3 umfasst, real zu betreiben, wird die Bewertung des Qualitätsmaßes des Verhaltens des technischen Systems 2 sehr aufwendig, so dass die Anzahl der Vermessungsvorgänge am realen technischen System 2 zur Bewertung einer bestimmten Regelungsstrategie möglichst minimiert werden sollte.

Es wird im Folgenden angenommen, dass die Regelungsstrategie einer Linearzustandsregelungsstrategie mit $\pi_\theta(\boldsymbol{x}) = -K(\theta)\boldsymbol{x}$ entspricht, wobei K einer Regelungsmatrix entspricht, deren Elemente den Modellparametern der Regelungsstrategie entsprechen oder von solchen abhängen.

Lineare Regelungsstrategien haben den Vorteil, dass sie eine geringe Dimensionalität im Vergleich zu anderen Regelungsmodellen aufweisen. Weiterhin ermöglicht die lineare Regelungsstrategie, dass diese in einfacher Weise in Reglern umgesetzt werden kann und so die Effizienz der Bayes'schen Optimierung erhöht wird.

In Verbindung mit der Bayes'schen Optimierung kann ein Linear Quadratic Regulator, ein sogenannter LQR-Regler, verwendet werden, wie im Bereich der Erstellung von Regelungsstrategien bekannt ist. Beim LQR-Regler werden das Systemverhalten und die Interaktion mit der Umgebung bei Vermessungsvorgängen durch einen gesteuerten Betrieb mit einem Satz variierender Eingangsgrößenvektoren und der Erfassung resultierender Zustandsgrößenvektoren ermittelt. Dabei wird die Systemdynamik gemäß

$$f(\boldsymbol{x_t}, \boldsymbol{u_t}) \approx A\boldsymbol{x}_t + B\boldsymbol{u}_t$$

linearisiert und die Kosten entsprechend quadriert

$$c(\boldsymbol{x}_t, \boldsymbol{u_t}) \approx \boldsymbol{x_t^T} Q \boldsymbol{x}_t + \boldsymbol{u}_t^T R \boldsymbol{u_t}$$

Durch diese Näherungen kann in dem Modellerstellungsblock 4 eine LQR-Rückkopplungsmatrix erstellt werden, die das Dynamikmodell darstellt und die allgemein als Regelungsmatrix $K = dlqr(A, B, Q, R)$ bezeichnet wird. Die Regelungsstrategie-Optimierung wird durchgeführt, indem direkt die Elemente der Regelungsmatrix als zu optimierende Modellparameter (K-Learning) angepasst werden, wobei ein Teil der Einträge bzw. jeder Eintrag (Element) der Regelungsmatrix einem Modellparameter für die Optimierung entspricht. Weiterhin können auch nur die Bestandteile der Regelungsmatrix K, die den Systemmatrizen A und B entsprechen, als zu optimierende Modellparameter angenommen werden, wobei jeder Eintrag der Matrizen A und B einem Modellparameter entspricht (AB-Learning).

Alternativ können in der Regelungsmatrix K nur die Matrizen Q und R (Gewichtungsmatrizen) als zu optimierende Modellparameter angenommen werden (QR-Learning). Dabei ist es ausreichend, nur die diagonalen Einträge der Gewichtungsmatrizen anzupassen, die die folgende Form haben:

$$K^{QR}(\theta) = dlqr\big(A, B, Q(\theta), R(\theta)\big)$$

$$\text{mit } \mathrm{Q}(\theta) = \mathrm{diag}\big(10^{\theta_1}, \dots, 10^{\theta_{n_x}}\big) \text{ und } R(\theta) = diag\big(10^{\theta_{n_x+1}}, \dots, 10^{\theta_{n_x+n_u}}\big)$$

Diese Verfahren werden entsprechend der Zugehörigkeit der zu optimierenden Modellparameter zu den obigen Matrizen K-Learning, AB-Learning und QR-Learning genannt.

Bei der Bayes'schen Optimierung muss die Modelparameterdomäne vor Beginn der Optimierung definiert werden, um eine gute Schätzung der optimierten Modellparameter zu finden. Ohne Vorwissen ist es jedoch schwierig, die Wertebereiche für die einzelnen Modellparameter, d.h. die Modellparameterdomäne, für die Optimierung auszuwählen. Dies ist jedoch für ein effizientes Optimierungsverfahren ohne eine übermäßige Anzahl von Vermessungsvorgängen wesentlich.

Das obige Verfahren sieht daher vor, einen geeigneten Suchbereich für die Modellparameter auszuwählen, so dass die Anzahl der Vermessungsvorgänge reduziert werden kann. Dies ist insbesondere bei hoher Dimensionalität erforderlich, da dort eine manuelle Einstellung der Wertebereiche jedes der Modellparameter nicht ohne Weiteres möglich ist. Daher werden die Wertebereiche der Modellparameter zunächst durch Lernen einer Verteilung über Dynamikmodelle ermittelt und nachfolgend diese Verteilung verwendet, um die Wertebereiche für jeden der Modellparameter auszuwählen. Die Verteilung erhält man durch die Bayes'sche Lineare Regression durch aufgezeichnete Datenwerte der Zustandsgrößenvektoren und Eingangsgrößenvektoren, um ein angenähertes lineares Modell der Systemdynamik zu erhalten. Dies führt zu einer Gauß-Verteilung über den Modellen

$$p(vec(A,B)|Data) = N(vec(A,B)|\mu^{AB}, \Sigma^{AB})$$

wobei $\mu^{AB}$ der Maximum-Posterior-(MAP-)Schätzwert und wobei die Notation *vec*(.,.) angibt, dass die Matrizen A und B in einen Vektor umgeformt sind.

Mithilfe der Ermittlung der Regelungsmatrizen $K = dlqr(A, B, Q, R)$ für eine Anzahl von vorgegebenen dynamischen Systemmodellen können Verteilungen der Modellparameter der Elemente der Regelungsmatrix K bestimmt werden. Diese werden verwendet, um sinnvolle Wertebereiche für die Modellparameter auszuwählen. Um eine Verteilung über mögliche Regelungsmatrizen zu erhalten, werden $N_S$ Paare von $(A, B)$ durch die obigen dlqr-Funktion berechnet, um eine Beispielverteilung (A posteriori verteilung) $p(vec(K)|(A,B)_{1:n_s})$ zu erhalten. Anschließend wird die Werteverteilung durch ein Produkt von unabhängigen Normalverteilungen angegeben

$$p\big(vec(K)\big|(A,B)_{1:n_s}\big) \approx \prod_{i=1}^{n_\theta} N\big(K_i\big|\mu_i^K, \sigma_i^K\big)$$

Mit dieser Näherung kann man Wertebereiche $\Theta^K$ von Modellparameter um den Mittelwert der Verteilung und mit der Breite angeben, die durch die Standardabweichung der Verteilung angegeben ist:

$$\Theta^K = [\mu_1^K - \beta\sigma_1^K, \mu_1^K + \beta\sigma_1^K] \times \ldots \times \big[\mu_{n_\theta}^K - \beta\sigma_{n_\theta}^K, \mu_{n_\theta}^K + \beta\sigma_{n_\theta}^K\big]$$

Dabei bestimmt der Skalierungsparameter β die effektive Größe der Wertebereiche der Modellparameter.

Mit steigendem Skalierungsparameter β wird das Bayes'sche Optimierungsverfahren flexibler, um eine bessere Lösung zu finden, wobei jedoch mehr Vermessungsdurchgänge zur Ermittlung der Modellparameter benötigt werden. Somit ist es notwendig, einen Trade-off zwischen dem Begrenzen der Wertebereiche für Modellparameter auf eine vernünftige Größe und ausreichend großen Wertebereichen auszuwählen, so dass es nicht zu Fehlern aufgrund einer Fehlanpassung des Systemmodells kommt. Beispielsweise können die Wertebereiche der Modellparameter während der Optimierung dynamisch angepasst werden.

Um potenzielle Korrelationen zwischen den Modellparametern zu nutzen, kann die Werteverteilung mit einem multivariablen Gauß-Prozess angenähert werden $p(vec(K)|(A, B)_{1:nS}) \approx N(vec(K)|\mu^K, \Sigma^K)$. Hier wird nun vorgeschlagen, die Modellparameter in den Eigenraum der Kovarianzmatrix $\Sigma^K$ mit $\tilde{\theta} = T(\theta - \mu^K)$ zu transformieren, wobei die Transformationsmatrix T aus den Eigenvektoren $\Sigma^K$ besteht. In dem Eigenraum werden die Wertebereiche der Modellparameter dann zu $\widetilde{\Theta}_{PCA}^K = [-\beta\tilde{\sigma}_1^K, \beta\tilde{\sigma}_1^K] \times \ldots \times \big[-\beta\tilde{\sigma}_{n_\theta}^K, \beta\tilde{\sigma}_{n_\theta}^K\big]$, wobei $\tilde{\sigma}_i$; den i-ten Eigenwert von $\Sigma_K$ angibt. Im Wesentlichen wird eine prinzipielle Komponentenanalyse PCA durchgeführt.

Nachdem die Wertebereiche der Modellparameter ausgewählt sind, ist es möglich, dass in bestimmten Dimensionen die Wertebereiche der Modellparameter zu konservativ gewählt sind. Das kann beispielsweise vorkommen, wenn der Skalierungsparameter β zu klein ist, oder aufgrund einer Modellabweichung. Damit

Während des Optimierungsprozesses kann es vorkommen, dass der optimale Modellparametervektor nicht innerhalb der ausgewählten Modellparameterdomäne liegt. Daher kann die Modellparameterdomäne dynamisch während der Optimierung angepasst werden.

Während des Ablaufs der Bayes'schen Optimierung liegt ein Schätzwert des Optimums der Modellparameterwerte vor, d. h. das Minimum der angenäherten Qualitätsfunktion in der aktuellen Modellparameterdomäne. Wenn sich aus der Bayes'schen Optimierung ergibt, dass der Ort des geschätzten Optimums an einer Bereichsgrenze der Modellparameterdomäne liegt, ist es wahrscheinlich, dass bessere Modellparameter außerhalb der aktuellen Modellparameterdomäne liegen. Daher wird vorgeschlagen, den Wertebereich desjenigen Modellparameters, dessen Wert an der Grenze der Modellparameterdomäne liegt, zu erweitern. Diese dynamische Anpassung der Modellparameterdomäne kann auf verschiedene Weise ausgeführt werden.

Die Anpassung der Wertebereiche für Modellparameter ermöglicht es, ausgehend von einem begrenzten Wertebereich diesen während der Optimierung dynamisch nur für diejenigen Dimensionen des Modellparametervektors anzupassen, bei denen die Optimierung einen Grenzbereich der Modellparameterdomäne trifft. Dadurch kann die Optimierung insgesamt effizienter vorgenommen werden, so dass die Konvergenz erheblich verbessert wird. Weiterhin können potenzielle Modellfehler besser ausgeglichen werden, so dass das optimierte Systemmodell leistungsfähiger wird. Durch die Verbesserung der Effizienz ist es möglich, die Bayes'sche Optimierung zu hochdimensionalen Regelungsstrategien zu skalieren.

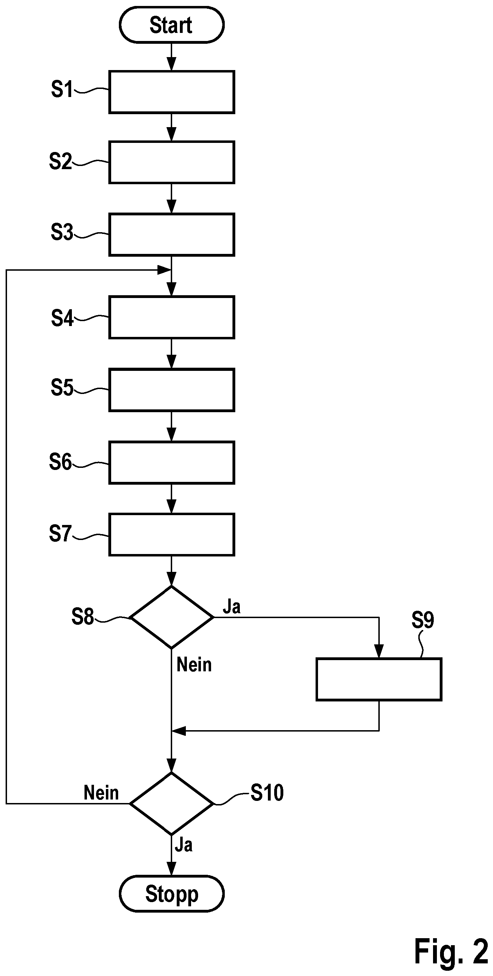

Zur Veranschaulichung der Erstellung und Adaption einer Regelung eines technischen Systems wird im Folgenden das Verfahren anhand eines Flussdiagramms der Figur 2 beschrieben.

Dazu werden in Schritt S1 eine Reihe von Systemmodellen vorgegeben, die jeweils auf physikalischen Modellgleichungen basieren und entsprechend obigem Verfahren die Regelungsmatrix K=dlqr(A,B,Q,R) ermittelt. Die Systemmodelle weisen vorzugsweise unterschiedliche Parametrisierungen auf.

Die Verteilung der initialen Regelungsmodelle erhält man über die Erstellung einer Gauß-Verteilung über jeden der Modellparameter der Regelungsmatrix K

$$p(vec(A,B)|Data) = N(vec(A,B)|\mu^{AB}, \Sigma^{AB})$$

wobei $\mu^{AB}$ der Maximum-Posterior-(MAP-)Schätzwert (Erwartungswert der entsprechenden Gaussverteilung) und die Notation *vec*(.,.) angibt, dass die Matrizen A und B in einen Vektor umgeformt sind.

In Schritt S2 werden die Verteilungen wird der Maximum-Posterior-Schätzwert (MAP-Schätzwert) der Elemente $\theta^{MAP}$ der Regelungsmatrix K ermittelt. Der Maximum-Posterior-Schätzwert (MAP-Schätzwert) der Elemente $\theta^{MAP}$ der Regelungsmatrix K entspricht

$$p(\boldsymbol{w}|\boldsymbol{t}) = N(\boldsymbol{w}|\boldsymbol{m_n}, \boldsymbol{S_n}), \;\; \boldsymbol{\theta^{MAP}} = \boldsymbol{m_n} = \boldsymbol{S_n}\left(\boldsymbol{S_0^{-1}}\boldsymbol{m_0} + \gamma \boldsymbol{X^T}\boldsymbol{t}\right), \;\; \boldsymbol{S_n^{-1}} = \boldsymbol{S_0^{-1}} + \gamma \boldsymbol{X^T}\boldsymbol{X}$$

wobei n der Anzahl der Datenpunkte, $\gamma$ einer vorgegebenen Konstante, die das Rauschen in den Daten beschreibt, $\boldsymbol{m_0}$ einem A-priori Mittelwert der zu schätzenden Modellparameter, $\boldsymbol{S_0}$ einer a-priori Kovarianz der zu schätzenden Modellparameter, X den Orten der Datenpunkte (in einer Matrix zusammengefasst), t den Funktionswerten der Datenpunkte (in einem Vektor zusammengefasst), $\boldsymbol{m_n}$ den a-posteriori Erwartungswerten (Mittelwerten) der zu schätzenden Modellparameter und $\boldsymbol{S_n}$ der a-posteriori Kovarianz der zu schätzenden Modellparameter entsprechen.

Anschließend wird die Werteverteilung durch ein Produkt von unabhängigen Normalverteilungen angegeben

$$p\left(vec(K)\middle|(A,B)_{1:n_s}\right) \approx \prod_{i=1}^{n_\theta} N\left(K_i\middle|\mu_i^K, \sigma_i^K\right)$$

wobei $n_s$ der Anzahl der Samples, die von p(vec(K) | A, B) bestimmt werden, und $n_\theta$ der Anzahl der Parameter, die geschätzt werden sollen, entsprechen.

Mit dieser Näherung kann man Wertebereiche $\Theta^K$ von Modellparameter um den Mittelwert der Verteilung und mit der Breite angeben, die durch die Standardabweichung der Verteilung angegeben ist:

$$\Theta^K = [\mu_1^K - \beta\sigma_1^K, \mu_1^K + \beta\sigma_1^K] \times \ldots \times \left[\mu_{n_\theta}^K - \beta\sigma_{n_\theta}^K, \mu_{n_\theta}^K + \beta\sigma_{n_\theta}^K\right]$$

Dabei bestimmt der Skalierungsparameter β die effektive Größe der Wertebereiche der Modellparameter.

Mit steigendem Skalierungsparameter β wird das Bayes'sche Optimierungsverfahren flexibler, um eine bessere Lösung zu finden, wobei jedoch mehr Vermessungsdurchgänge zur Ermittlung der Modellparameter benötigt werden. Somit ist es notwendig, einen Trade-off zwischen dem Begrenzen der Wertebereiche für Modellparameter auf eine vernünftige Größe und ausreichend großen Wertebereichen auszuwählen, so dass es nicht zu Fehlern aufgrund einer Fehlanpassung des Systemmodells kommt. Beispielsweise können die Wertebereiche der Modellparameter während der Optimierung dynamisch angepasst werden.

Um potenzielle Korrelationen zwischen den Modellparametern zu nutzen, kann die Werteverteilung alternativ mit einem multivariablen Gauß-Prozess angenähert werden $p(vec(K)|(A,B)_{1:n_s}) \approx N(vec(K)|\mu^K, \Sigma^K)$. Hier wird nun vorgeschlagen, die Modellparameter in den Eigenraum der Kovarianzmatrix $\Sigma^K$ mit $\tilde{\theta} = T(\theta - \mu^K)$ zu transformieren, wobei die Transformationsmatrix T aus den Eigenvektoren $\Sigma^K$ besteht. In dem Eigenraum werden die Wertebereiche der Modellparameter dann zu $\tilde{\Theta}_{PCA}^K = [-\beta\tilde{\sigma}_1^K, \beta\tilde{\sigma}_1^K] \times \ldots \times \left[-\beta\tilde{\sigma}_{n_\theta}^K, \beta\tilde{\sigma}_{n_\theta}^K\right]$, wobei $\tilde{\sigma}_i$ den i-ten Eigenwert von $\Sigma_K$ angibt. Im Wesentlichen wird eine prinzipielle Komponentenanalyse PCA durchgeführt.

In Schritt S3 werden die Wertebereiche für die zu bestimmenden Regelungsparameter für das Regelungsmodell festgelegt. Die Bayes'sche Optimierung muss die Wertebereiche der Regelungsparameter auch hinsichtlich der Längenskalen der Kostenfunktion möglichst ausreichend überdecken. A priori ist es oftmals schwierig zu bestimmen, in welchen Wertebereichen die Regelungsparameter, d.h. die Einträge der Regelungsmatrix K, optimiert werden müssen, so dass ein gutes Regelungsverhalten erreicht wird.

Hierzu werden mithilfe der MAP-Schätzwerte $\theta^{MAP}$ aus der Systemidentifikation des Schritts S2 sinnvolle Wertebereiche, in denen nachfolgend die Regelungsparameter optimiert werden, für jeden der Regelungsparameter ausgewählt.

In Schritt S4 wird der Optimierungsprozess gestartet.

Es wird dazu ein neuer Satz von Testmodellparametern $\theta'$ ausgewählt, in dem eine vorgegebene Aquisitionsfunktion $\alpha(\theta; D_n)$ mit $D_{n+1}$ maximiert bzw. minimiert wird. Die Aquisitionsfunktion $\alpha(\theta; D_n)$ ist so vorgegeben, dass sie eine Kombination aus Exploration und Exploitation nutzt, um einen neuen Testmodellparametersatz an einem Minimum oder Maximum (je nach gewählter Aquisitionsfunktion) der Aquisitionsfunktion zu ermitteln. Die Aquisitionsfunktion nutzt Parameter der als Gaußprozess-Modell erstellten Qualitätsfunktion wie z.B. den Gaußprozess-Mittelwert (Erwartungswert) und die Gaußprozess-Standardabweichung. Exploration bedeutet in dem Kontext des erfindungsgemäßen Verfahrens, dass Bereiche des möglichen Modellparameterraums für die Auswahl eines neuen Testmodellparameters bevorzugt werden, in denen durch vorangehende Vermessungsvorgänge das Verhalten des technischen Systems noch nicht bewertet worden sind. Exploitation in dem Kontext des erfindungsgemäßen Verfahrens bedeutet, dass ein Modellparametersatz für die nächste Bewertung des Verhaltens des technischen Systems durch einen Vermessungsvorgang ausgewählt wird, der als ein Satz optimaler Modellparameter eingeschätzt wird.

$$\theta^* = \arg\min_\theta J(\theta);\ \theta' \longleftarrow \theta^*$$

Die Aquisitionsfunktion nutzt Parameter der Qualitätsfunktion, die durch ein Gauß-Prozess-Modell beschrieben wird, wie z.B. den Erwartungswert $\mu(x)$ und die diesem Erwartungswert zugeordnete Standardabweichung $\sigma(x)$. Ein Beispiel ist die sogenannte Lower-Confidence-Bound (LCB) Aquisitionsfunktion, die wie folgt beschrieben wird: $LCB(x) = \mu(x) - k\sigma(x)$. Dieses neue Kriterium kann effizient mit gängigen gradienten-basierten Methoden minimiert werden und das Minimum von LCB(x) bildet dann den neuen Auswertungspunkt für die unbekannte Funktion f bzw. das Vermessen des technischen Systems 2.

Das LCB-Kriterium ist nicht die einzige Akquisition-Funktion, die in der Literatur vorgeschlagen wurden. Andere Kriterien sind z.B. Expected Improvement (EI), Upper Confidence Bound (UCB), Probability of Improvement (PI) oder sogenannte Entropy Search Methoden, die auf informations-theoretischen Überlegungen basieren.

In Schritt S5 wird ein Vermessungsvorgang ausgeführt und basierend auf dem Testmodellparametersatz eine Regelung des technischen Systems 2 durch die Regelungseinheit 3 während des Zeitfensters t=0...T bewertet, um entsprechend Testdaten in Form von Eingangsgrößen u und resultierende Zustandsgrößen x zu erfassen.

Basierend auf den Testdaten wird in Schritt S6 ein Qualitätsmaß ermittelt. Dies kann beispielsweise durch Vergleich des Systemverhaltens (Systemzustände) mit gewünschten Systemzuständen erreicht werden. Beispielsweise können die Regelabweichungen der Regelung betragsmäßig integriert bzw. akkumuliert werden, um ein Qualitätsmaß zu erhalten, das die Robustheit der Regelung angibt.

In dem optionalen Schritt S7 werden die Daten zur Erstellung der Qualitätsfunktion um den Testmodellparametersatz $\theta'$ und das zugehörige Qualitätsmaß $J(\theta')$ , d.h. die Güte der resultierenden Regelung, ergänzt und das Gaußprozessmodell, das die Qualitätsfunktion bildet, neu trainiert oder aktualisiert.

In Schritt S8 wird überprüft, ob einer der Modellparameter des Testmodellparametersatzes auf einer Grenze der Modellparameterdomäne liegt. Ist dies der Fall (Alternative: Ja), wird in Schritt S9 diejenige Grenze des Parameterwertebereichs , auf der einer der Modellparameter liegt, um ein Erweiterungsmaß erweitert. Andernfalls (Alternative: Nein) wird das Verfahren mit Schritt S10 fortgesetzt.

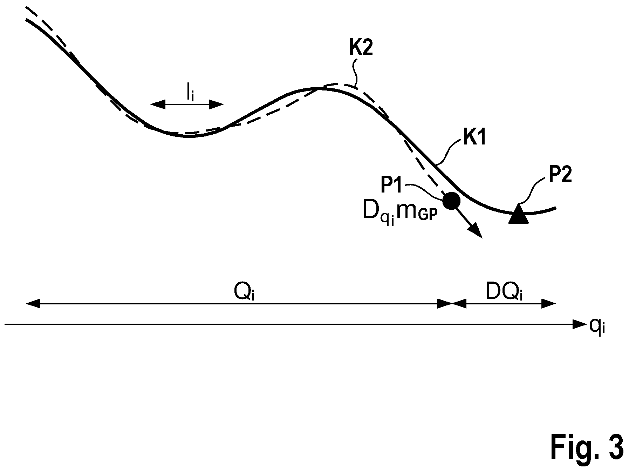

In Figur 3 ist schematisch für einen eindimensionalen Fall ein Diagramm für den Verlauf eines realen (K1) und modellierten (K2) Qualitätsmaßes abhängig von einer Dimension der Eingangsgrößen dargestellt. $\Theta_i$ gibt den Wertebereich des betreffenden Modellparameters der Modellparameterdomäne des Optimierungsverfahrens an und der Punkt P1 den Modellparameterwert, der an einer Grenze der Modellparameterdomäne liegt. In diesem Fall wird die Modellparameterdomäne um das Erweiterungsmaß $\Delta\Theta_i$ erweitert, um den optimierten Modellparameter P2, gekennzeichnet als Dreieck, durch nachfolgende Iterationen des Bayes'schen Optimierungsverfahrens zu erreichen.

Während des Ablaufs der Bayes'schen Optimierung liegt ein Schätzwert des Optimums der Modellparameterwerte vor, d. h. das Minimum der angenäherten Qualitätsfunktion in der aktuellen Modellparameterdomäne $\Theta_i$. Wenn sich aus der Bayes'schen Optimierung ergibt, dass der Ort des geschätzten Optimums an einer Bereichsgrenze der Modellparameterdomäne liegt, ist es wahrscheinlich, dass bessere Modellparameter außerhalb der aktuellen Modellparameterdomäne liegen. Daher wird vorgeschlagen, den Wertebereich desjenigen Modellparameters, dessen Wert an der Grenze der Modellparameterdomäne $\Theta_i$ liegt, zu erweitern. Diese dynamische Anpassung der Modellparameterdomäne $\Theta_i$ kann auf verschiedene Weise ausgeführt werden.

Das Erweiterungsmaß $\Delta\Theta_i$ kann abhängig von einem oder mehreren der folgenden Angaben angegeben sein:

- dem Gradienten des Gauß-Prozess-Posterior-Mittelwerts an dem Punkt der laufenden Schätzung des Optimums $\nabla_{\theta_i}\mu_{GP}(\theta^*)$. Der Gradient ist die Ableitung dieses Gauß-Prozess-Posterior-Mittelwerts nach dem betreffenden Modellparameter $\theta_i$. Ist der Gradient an dem Grenzbereich hoch, ist der potenziell bessere Wert des Modellparameters weiter von dem Grenzbereich entfernt, als wenn der Gradient klein ist. D.h. bei hohem Gradienten wird der Wertebereich des betreffenden Modellparameters um einen höheren Wert erweitert als bei einem kleinen Gradienten.
- der Längenskala desjenigen Modellparameters, der auf einer Grenze des Modelparameterdomäne liegt, bezogen auf den Gauß-Prozess, der die Qualitätsfunktion annähert. Für große Längenskalen nimmt das Modell an, dass die Qualitätsfunktion sich nur langsam ändert und somit sollte das Maß zur Erweiterung des Wertebereichs des betreffenden Modellparameters entsprechend erhöht werden.
- der Ausdehnung des Wertebereichs $\Theta_i$ des betreffenden Modellparameters. Wenn der Wertebereich groß ist, ist das Maß der Erweiterung entsprechend hoch und umgekehrt.

Anschließend wird in Schritt S10 eine Abbruchbedingung überprüft also z.B. die Zeitdauer, die für die Optimierung der Qualitätsfunktion aufgewendet werden soll, oder die Anzahl der Iterationen oder ein geeignetes Konvergenzkriterium und bei Fortsetzung des Optimierungsverfahrens (Alternative: Nein) zu Schritt S4 zurückgesprungen. Andernfalls (Alternative: Ja) wird das Verfahren beendet.

Die Modellparameter der Regelungsstrategie können während des Regeln des technischen Systems 2 kontinuierlich oder zu regelmäßigen oder vorbestimmten

Zeitpunkten angepasst werden, so dass sich im laufenden Betrieb die Regelung des technischen Systems 2 zusehends verbessert.

Die nachfolgende Tabelle veranschaulicht beispielhafte Einsatzbereiche des obigen Verfahrens zum Bewerten einer Trajektorie:

| **Einsatzzweck** | **Zu optimierende Regelung** |
|---|---|
| Werkzeugmaschinen, Robotern | Lageregelung einer elektrischen Maschine zur Positionseinstellung oder Bewegungssteuerung von Robotern |
| Dronen oder autonomen Robotern | Gleichgewichtsregelung |
| Verbrennungsmotoren | Luftsystemregelung, insbesondere Lambdaregelung, Einspritzregelung |
| | |

## Patentansprüche

**1.** Computerimplementiertes Verfahren zum Erstellen einer Regelung für ein technisches System (2) mithilfe eines Bayes'schen Optimierungsverfahrens vorgesehen, wobei die Regelung basierend auf Modellparametern **($\theta$)** eines Regelungsmodells erstellt und ausführbar ist, wobei das technische System (2) ein Roboter ist und wobei zur Optimierung der Regelung folgende Schritte ausgeführt werden:

- Bereitstellen einer Qualitätsfunktion, deren Form einer trainierbaren Regressionsfunktion entspricht und die eine Qualität einer Regelung des technischen Systems (2) basierend auf Modellparametern **($\theta$)** bewertet;
- Durchführen (S4) eines Bayes'schen Optimierungsverfahrens basierend auf der Qualitätsfunktion, um iterativ einen Modellparametersatz mit Modellparametern ($\theta$) innerhalb einer initial vorgegebenen Modellparameterdomäne ($\Theta$) zu optimieren;

wobei vor dem Durchführen des Bayes'schen Optimierungsverfahrens initiale Regelungsmodelle auf Grundlage von mehreren dynamischen Systemmodellen erstellt werden und die Modellparameterdomäne ($\Theta$), die die zulässigen Wertebereiche für die Modellparameter **($\theta$)** angibt, bestimmt wird, indem eine Verteilung der Modellparameter **($\theta$)** der initialen Regelungsmodelle bestimmt wird und abhängig von einem zugehörigen Maximum-a-Posteriori-Schätzwert **($\theta^{MAP}$)** und deren jeweiliger Standardabweichung der Verteilung der Modellparameter **($\theta$)** die Wertebereiche der Modellparameter **($\theta$)** initial definiert werden.

**2.** Verfahren nach Anspruch 1, wobei die dynamischen Systemmodelle, insbesondere basierend auf physikalischen Modellgleichungen, vorgegeben werden.

**3.** Verfahren nach Anspruch 1 oder 2, wobei die Regelungsmodelle ($\pi_\theta(\boldsymbol{x})$) als Linearzustandsregelungsstrategie entsprechend $\pi_\theta(\boldsymbol{x}) = -\boldsymbol{K}(\theta)\boldsymbol{x}$ vorgegeben werden, wobei K eine die Regelung charakterisierende Regelungsmatrix darstellt.

**4.** Verfahren nach Anspruch 3, wobei die Regelungsmodelle jeweils durch eine Regelungsmatrix K=dlqr(A,B,Q,R) vorgegeben werden.

**5.** Verfahren nach Anspruch 4, wobei die Wertebereiche für die Modellparameter **($\theta$)** abhängig von einem Maximum-Posterior-Schätzwert **($\theta^{MAP}$)** der Elemente der Regelungsmatrix (K) ermittelt werden.

**6.** Verfahren zum adaptiven Regeln eines technischen Systems (2), wobei Modellparameter **($\theta$)** des Regelungsmodells während des Regeln des technischen Systems (2) basierend auf dem Verfahren nach einem der Ansprüche 1 bis 5 kontinuierlich oder zu regelmäßigen oder vorbestimmten Zeitpunkten angepasst werden.

**7.** Vorrichtung zum Erstellen einer Regelung für ein technisches System (2) mithilfe eines Bayes'schen Optimierungsverfahrens, wobei die Regelung basierend auf Modellparametern **($\theta$)** eines Regelungsmodells erstellt und ausführbar ist, wobei das technische System (2) ein Roboter ist und wobei zur Optimierung der Regelung folgende Schritte ausgeführt werden:

- Bereitstellen einer Qualitätsfunktion **($J(\theta)$),** die einer trainierbaren Regressionsfunktion entspricht und die eine Qualität einer Regelung des technischen Systems (2) basierend auf Modellparametern ($\theta$) bewertet;
- Durchführen eines Bayes'schen Optimierungsverfahrens basierend auf der Qualitätsfunktion ($J(\theta)$), um iterativ einen Modellparametersatz mit Modellparametern **($\theta$)** innerhalb einer initial vorgegebenen Modellparameterdomäne ($\Theta$) zu optimieren;

wobei vor dem Durchführen des Bayes'schen Optimierungsverfahrens initiale Regelungsmodelle auf Grundlage von mehreren dynamischen Systemmodellen erstellt werden und die Modellparameterdomäne ($\Theta$), die die zulässigen Wertebereiche für die Modellparameter **($\theta$)** angibt, bestimmt wird, indem eine Verteilung der Modellparameter **($\theta$)** der initialen Regelungsmodelle bestimmt wird und abhängig von einem zugehörigen Maximum-a-Posteriori-Schätzwert **($\theta^{MAP}$)** und deren jeweiliger Standardabweichung der Verteilung der Modellparameter **($\theta$)** die Wertebereiche der Modellparameter **($\theta$)** initial definiert werden.

**8.** Regelungssystem (1) mit einem technischen System (2) und einer Regelungseinheit (3) zum Regeln des technischen Systems (2), wobei das technische System (2) ein Roboter ist, wobei in der Regelungseinheit (3) ein Regelungsmodell zum Bereitstellen eines Eingangsgrößenvektors abhängig von Zustandsgrößen des technischen Systems (2) implementiert ist, wobei ein Modellerstellungsblock (4) vorgesehen ist, um iterativ einen Modellparametersatz mit Modellparametern **($\theta$)** für das Regelungsmodell auf Grundlage eines in einem Optimierungsblock (5) ausgeführten Bayes'schen Optimierungsverfahrens innerhalb einer initial vorgegebenen Modellparameterdomäne ($\Theta$) zu optimieren, wobei das Bayes'schen Optimierungsverfahren basierend auf einer vorgegebenen Qualitätsfunktion, die in einem Qualitätsfunktionsblock (6) bestimmt bzw. vorgegeben wird, durchgeführt wird, wobei vor dem Durchführen des Bayes'schen Optimierungsverfahrens initiale Regelungsmodelle auf Grundlage von mehreren dynamischen Systemmodellen erstellt werden und die Modellparameterdomäne ($\Theta$), die die zulässigen Wertebereiche für die Modellparameter **($\theta$)** angibt, bestimmt wird, indem eine Verteilung der Modellparameter **($\theta$)** der initialen Regelungsmodelle bestimmt wird und abhängig von einem zugehörigen Maximum-a-Posteriori-Schätzwert **($\theta^{MAP}$)** und deren jeweiliger Standardabweichung der Verteilung der Modellparameter **($\theta$)** die Wertebereiche der Modellparameter **($\theta$)** initial definiert werden.

**9.** Computerprogramm mit Programmcodemitteln, das dazu eingerichtet ist, ein Verfahren nach einem der Ansprüche 1 bis 6 auszuführen, wenn das Computerprogramm auf einer Recheneinheit ausgeführt wird.

**10.** Maschinenlesbares Speichermedium mit einem darauf gespeicherten Computerprogramm nach Anspruch 9.

## Claims

1. Computer-implemented method provided for creating control for a technical system (2) by means of a Bayesian optimization method, wherein the control is created and can be executed based on model parameters ($\theta$) of a control model, wherein the technical system (2) is a robot, and wherein the following steps are carried out for optimizing the control:

   - providing a quality function, the form of which corresponds to a trainable regression function and which assesses the quality of control of the technical system (2) based on model parameters ($\theta$);
   - performing (S4) a Bayesian optimization method based on the quality function in order to iteratively optimize a model parameter set with model parameters ($\theta$) within an initially predefined model parameter domain ($\Theta$);

   wherein, before performing the Bayesian optimization method, initial control models are created based on a plurality of dynamic system models and the model parameter domain ($\Theta$), which specifies the permissible value ranges for the model parameters ($\Theta$), is determined by determining a distribution of the model parameters ($\theta$) of the initial control models and initially defining the value ranges of the model parameters ($\theta$) depending on an associated maximum a-posteriori estimated value ($\theta^{MAP}$) and its respective standard deviation of the distribution of the model parameters ($\theta$).

2. Method according to Claim 1, wherein the dynamic system models are predefined, in particular based on physical model equations.

3. Method according to Claim 1 or 2, wherein the control models ($\Pi_\theta(x)$) are predefined as a linear state control strategy according to $\Pi_\theta(x) = -K(\theta)x$, where K represents a control matrix characterizing the control.

4. Method according to Claim 3, wherein the control models are each predefined by a control matrix K=dlqr(A,B,Q,R).

5. Method according to Claim 4, wherein the value ranges for the model parameters ($\theta$) are determined depending on a maximum posterior estimated value ($\theta^{MAP}$) of the elements of the control matrix (K).

6. Method for adaptively controlling a technical system (2), wherein model parameters ($\theta$) of the control model are adapted continuously or at regular or predetermined times during the control of the technical system (2) based on the method according to one of Claims 1 to 5.

7. Device for creating control for a technical system (2) by means of a Bayesian optimization method, wherein the control is created and can be executed based on model parameters ($\theta$) of a control model, wherein the technical system (2) is a robot, and wherein the following steps are carried out for optimizing the control:

   - providing a quality function ($J(\theta)$) which corresponds to a trainable regression function and which assesses the quality of control of the technical system (2) based on model parameters ($\theta$);
   - performing a Bayesian optimization method based on the quality function ($J(\theta)$) in order to iteratively optimize a model parameter set with model parameters ($\theta$) within an initially predefined model parameter domain ($\Theta$);

   wherein, before performing the Bayesian optimization method, initial control models are created based on a plurality of dynamic system models and the model parameter domain ($\Theta$), which specifies the permissible value ranges for the model parameters ($\theta$), is determined by determining a distribution of the model parameters ($\theta$) of the initial control models and initially defining the value ranges of the model parameters ($\theta$) depending on an associated maximum a-posteriori estimated value ($\theta^{MAP}$) and its respective standard deviation of the distribution of the model parameters ($\theta$).

8. Control system (1) having a technical system (2) and a control unit (3) for controlling the technical system (2), wherein the technical system (2) is a robot, wherein a control model for providing an input variable vector depending on state variables of the technical system (2) is implemented in the control unit (3), wherein a model creation block (4) is provided in order to iteratively optimize a model parameter set with model parameters ($\theta$) for the control model based on a Bayesian optimization method carried out in an optimization block (5) within an initially predefined model parameter domain ($\Theta$), wherein the Bayesian optimization method is performed based on a predefined quality function which is determined or predefined in a quality function block (6), wherein, before performing the Bayesian optimization method, initial control models are created based on a plurality of dynamic system models, and the model parameter domain ($\Theta$), which specifies the permissible value ranges for the model parameters ($\theta$), is determined by determining a distribution of the model parameters ($\theta$) of the initial control models and initially defining the value ranges of the model parameters ($\theta$) depending on an associated maximum a-posteriori estimated value ($\theta^{MAP}$) and its respective standard deviation of the distribution of the model parameters ($\theta$).

**9.** Computer program comprising program code means which is configured to carry out a method according to any of Claims 1 to 6 when the computer program is executed on a computing unit.

**10.** Machine-readable storage medium with a computer program according to Claim 9 stored thereon.

## Revendications

**1.** Procédé informatisé de création d'une régulation pour un système technique (2) à l'aide d'un procédé d'optimisation bayésienne, dans lequel la régulation est créée et exécutable sur la base de paramètres de modèle ($\theta$) d'un modèle de régulation, le système technique (2) étant un robot et les étapes suivantes étant exécutées pour optimiser la régulation :

- fournir une fonction de qualité dont la forme correspond à une fonction de régression entraînable et qui évalue la qualité d'une régulation du système technique (2) sur la base de paramètres de modèle ($\theta$);
- exécuter (S4) un procédé d'optimisation bayésienne sur la base de la fonction de qualité afin d'optimiser de manière itérative un ensemble de paramètres de modèle avec des paramètres de modèle ($\theta$) au sein d'un domaine de paramètres de modèle ($\Theta$) initialement prédéfini ;

dans lequel, avant l'exécution du procédé d'optimisation bayésienne, des modèles de régulation initiaux sont créés sur la base de plusieurs modèles de système dynamiques, et le domaine de paramètres de modèle ($\Theta$), qui spécifie les plages de valeurs admissibles pour les paramètres de modèle ($\theta$), est déterminé par détermination d'une distribution des paramètres de modèle ($\theta$) des modèles de régulation initiaux, et les plages de valeurs des paramètres de modèle ($\theta$) sont initialement définies en fonction d'une valeur estimée a posteriori maximale associée ($\theta^{MAP}$) et de leur écart-type respectif dans la distribution des paramètres de modèle ($\theta$).

**2.** Procédé selon la revendication 1, **caractérisé en ce que** les modèles de système dynamiques sont prédéfinis, en particulier sur la base d'équations de modèles physiques.

**3.** Procédé selon la revendication 1 ou 2, dans lequel les modèles de régulation ($\pi_\theta(x)$) sont prédéfinis sous la forme d'une stratégie de régulation d'état linéaire correspondant à $\pi_\theta(x) = -K(\theta)x$, où K représente une matrice de régulation caractérisant la régulation.

**4.** Procédé selon la revendication 3, dans lequel les modèles de régulation sont respectivement prédéfinis par une matrice de régulation K=dlqr(A,B,Q,R).

**5.** Procédé selon la revendication 4, dans lequel les plages de valeurs des paramètres de modèle ($\theta$) sont déterminées en fonction d'une valeur estimée a posteriori maximale ($\theta^{MAP}$) des éléments de la matrice de régulation (K).

**6.** Procédé de régulation adaptative d'un système technique (2), dans lequel des paramètres de modèle ($\theta$) du modèle de régulation sont adaptés en continu ou à des instants réguliers ou prédéterminés pendant la régulation du système technique (2) sur la base du procédé selon l'une quelconque des revendications 1 à 5.

**7.** Dispositif de création d'une régulation en boucle fermée pour un système technique (2) à l'aide d'un procédé d'optimisation bayésienne, dans lequel la régulation en boucle fermée est créée et exécutable sur la base de paramètres de modèle ($\theta$) d'un modèle de régulation, le système technique (2) étant un robot et les étapes suivantes étant exécutées pour optimiser la régulation :

- fournir une fonction de qualité ($J(\theta)$) qui correspond à une fonction de régression entraînable et qui évalue la qualité d'une régulation du système technique (2) sur la base de paramètres de modèle ($\theta$) ;
- exécuter un procédé d'optimisation bayésienne sur la base de la fonction de qualité ($J(\theta)$) afin d'optimiser de manière itérative un ensemble de paramètres de modèle avec des paramètres de modèle ($\theta$) au sein d'un domaine de paramètres de modèle ($\Theta$) initialement prédéfini ;

dans lequel, avant l'exécution du procédé d'optimisation bayésienne, des modèles de régulation initiaux sont créés sur la base de plusieurs modèles de système dynamiques, et le domaine de paramètres de modèle ($\Theta$), qui spécifie les plages de valeurs admissibles pour les paramètres de modèle ($\theta$), est déterminé par détermination d'une distribution des paramètres de modèle ($\theta$) des modèles de régulation initiaux, et les plages de valeurs des paramètres de modèle ($\theta$) sont initialement définies en fonction d'une valeur estimée a posteriori maximale associée ($\theta^{MAP}$) et de leur écart-type respectif dans la distribution des paramètres de modèle ($\theta$).

**8.** Système de régulation (1) comprenant un système technique (2) et une unité de régulation (3) pour réguler le système technique (2), le système technique (2) étant un robot, un modèle de régulation destiné à fournir un vecteur de variables d'entrée étant mis en œuvre dans l'unité de régulation (3) en fonction de variables d'état du système technique (2), un bloc de création de modèle (4) étant prévu pour optimiser de manière itérative un ensemble de paramètres de modèle avec des paramètres de modèle ($\theta$) destinés au modèle de régulation sur la base d'un procédé d'optimisation bayésien exécuté dans un bloc d'optimisation (5) au sein d'un domaine de paramètres de modèle initialement prédéfini ($\Theta$), le procédé d'optimisation bayésien étant exécuté sur la base d'une fonction de qualité prédéfinie, qui est déterminée ou prédéfinie dans un bloc de fonction de qualité (6), dans lequel, avant l'exécution du procédé d'optimisation bayésienne, des modèles de régulation initiaux sont créés sur la base de plusieurs modèles de système dynamiques, et le domaine de paramètres de modèle ($\Theta$), qui spécifie les plages de valeurs admissibles pour les paramètres de modèle ($\theta$), est déterminé par détermination d'une distribution des paramètres de modèle ($\theta$) des modèles de régulation initiaux, et les plages de valeurs des paramètres de modèle ($\theta$) sont initialement définies en fonction d'une valeur estimée a posteriori maximale associée ($\theta^{MAP}$) et de leur écart-type respectif dans la distribution des paramètres de modèle ($\theta$).

**9.** Programme informatique qui est conçu pour mettre en œuvre un procédé selon l'une quelconque des revendications 1 à 6 lorsque le programme informatique est exécuté sur une unité de calcul.

**10.** Support d'enregistrement lisible par machine, sur lequel est enregistré un programme informatique selon la revendication 9.

1
2
22
21
x
u
3
4
5
6
J(Q)

Fig. 1

Start
S1
S2
S3
S4
S5
S6
S7
S8
Ja
S9
Nein
Nein
S10
Ja
Stopp

Fig. 2

K2
$l_i$
K1
P1
P2
$D_{q_i}m_{GP}$
$Q_i$
$DQ_i$
$q_i$

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2013158678 A1
- WO 2018219943 A1